# EUROPEAN PATENT APPLICATION

(11) **EP 4 576 937 A1**
(43) Date of publication of application: **25.06.2025**
(21) Application number: 24221380.9
(22) Date of filing: 19.12.2024
(51) Int. Cl.: H05B 6/10

(54) **WINDOW INDUCTIVE HEATING SYSTEM**

(30) Priority: 19.12.2023 US 202363611780 P
(71) Applicant: Pittsburgh Glass Works, LLC, Cheswick, PA 15024 (US)
(72) Inventor: Dai, David, 15024 Cheswick (US)
(74) Representative: f & e patent

(57) **Abstract**

An inductive coupled window heating system and method having a conductive layer is disclosed. The conductive layer includes at least one slit around the peripheral edges of a targeted heating zone. The slits guide induced eddy currents from areas having high current density to areas having low current density to provide uniform heating in a targeted heating zone. An inductive coupled window heating system having a conductive layer with rough surfaces is also disclosed. Conductive layers with a rough surface increase the eddy current path length and increase the effective surface area or magnetic flux that leads to a higher metallization loss and more heat transferred to the heating zone on the window.

## Description

### CROSS REFERENCE TO RELATED APPLICATION

This application claims the benefit of United States Provisional Application No. 63/611,780, filed December 19, 2023, which is hereby incorporated by reference in its entirety.

### BACKGROUND OF THE INVENTION

### Field of the Invention

The present invention generally relates to a non-contact glass deicing and defrosting system and more specifically to an induction heating system employing a conductive surface configured for redistributing power for uniform heating within the conductive surfaces.

### Description of Related Art

One important step for improved driving safety in cold climates is the removal of frost, ice, and snow from vehicular windows prior to and during the engagement in the operation of the vehicle. Advanced Driver Assistance Systems (ADAS) and autonomous driving features, such as those that provide assistance to the driver in guiding a vehicle, may employ multiple sensors positioned on the vehicle windows to monitor the environment of the vehicle. Obscuring a sensor by condensation, ice, or snow limits the ADAS sensor's ability to receive information pertaining to the environment surrounding the vehicle. Common 12V DC power sources, found in most commercial and passenger vehicles, are able to deliver power to a resistance heating circuit for deicing/defrosting but this takes a considerable amount of time. Thus, traditional 12V power sources are unable to meet the requirements of a rapid ADAS sensor deicing system. Induction heating has advantages over resistance heating including energy efficiency, fast heating, and precise heating.

Induction heating is the process of heating an electrically conductive object by electromagnetic induction, where eddy currents are generated within the conductive object and resistance leads to Joule heating of the object. An induction heating system typically includes a metal object, a heating coil, and a power supply to provide a high-frequency alternating current (AC) to the coil. To heat the conductive object, the heating coil is placed immediately behind or near the conductive object. When AC current flows in the coil, the magnetic field produced by the coil is inductively coupled into the conductive object. With a changing magnetic flux in the conductive object, eddy currents are induced in the conductive object. Because the conductive object has electrical resistivity, Joule heating results in the conductive object. The frequency of AC used in induction heating depends on the object size, material type, coupling (between the coil and the object to be heated) and the penetration depth.

A prior art induction heating system for heating a windshield camera view zone is illustrated in US Patent Application Publication No. US20220174792A1. The heating elements have a regular pattern of a fine wire in the camera view zone so that the resistance near the view zone edge is identical to the resistance in the center. Therefore, the camera heating system produces non-uniform heating from the center to the edge of the camera view zone as the eddy current density increases towards the edge. Accordingly, new developments and improvements are needed.

### SUMMARY OF THE INVENTION

The following simplified summary of the invention is included in order to provide a basic understanding of some aspects and features of the disclosed invention. This summary is not an extensive overview, and it is not intended to identify key or critical elements or to delineate the scope of the invention. Its sole purpose is to present some general concepts of the invention in a simplified form as a prelude to the more detailed description that is presented below.

According to one aspect of the invention, a window heating system for a vehicle is disclosed that includes a first substrate having a No. 1 surface and a No. 2 surface, a second substrate having a No. 3 surface and a No. 4 surface, wherein the first and second substrates are laminated together via at least one interlayer, and wherein the window comprises a conductive layer positioned on the No. 2 surface or on the No. 3 surface. An induction coil is operatively positioned on the No. 4 surface to generate magnetic flux to induce currents and generate heat on the conductive layer and a power supply unit provides an AC current to the induction coil, wherein the conductive layer comprises at least one slit introduced around a peripheral edge of the conductive layer.

For the conductive layer, uniform temperature distribution can be achieved by introducing one or more slits on the heating zone perimeter of the conductive layer by removing a portion or portions of the conductive material to redirect induced current flow paths. By selective removal of portions of the conductive layer, one can guide the induced currents flowing from high current density areas to low current density areas to cause uniform current flow and hence uniform temperature distribution in the heating zone.

In some embodiments, the induction coil is a circular coil. Depending on the size and shape of the required heating zone and space constraints, the induction coil may be a conical coil, a square coil, a trapezoidal coil, a pancake coil, or any other shape. The shape and number of slits introduced on the conductive layer is dependent on the coil and heating layer configuration and the required uniformity of temperature.

According to another aspect of the invention, a window heating system for a vehicle includes a window comprising a substrate having a No. 1 surface and a No. 2 surface and a conductive layer positioned on the No. 2 surface. An induction coil is operatively positioned on the No. 2 surface to generate magnetic flux to induce currents and generate heat on the conductive layer and a power supply unit provides an AC current to the induction coil, wherein the conductive layer comprises at least one slit introduced around a peripheral edge of the conductive layer.

According to a further aspect of the invention, the conductive layer may have a rough surface. Because the skin depth of the induced eddy current is bigger than the thickness of the conductive layer, the induced current is forced to the surface of the conductive layer. Therefore, the effective current path length on the conductive layer is increased by the surface roughness, while its effective surface area magnetic flux is also increased by the surface roughness, both leading to higher metallization loss as heat. Consequently, one should expect more power dissipation and heat over that of conductive layers having smooth surfaces.

According to another aspect of the invention, a method of uniformly heating a field of view for use in an Advanced Driver Assistance System (ADAS) system for a vehicle comprises providing a window including a first substrate having a No. 1 surface and a No. 2 surface, a second substrate having a No. 3 surface and a No. 4 surface; providing at least one interlayer; laminating the first and second substrates together with the at least one interlayer; providing a conductive layer positioned on the No. 2 surface or on the No. 3 surface; operatively positioning an induction coil on the No. 4 surface to generate magnetic flux to induce currents and generate heat on the conductive layer; and providing a power supply unit to apply an AC current to said induction coil. According to one embodiment, the method can include removing a portion of the conductive layer to create one or more slits around a peripheral edge of the conductive layer to produce a uniform induced current flow on the surface of the conductive layer and hence a uniform heating on the field of view zone. In addition to or according to another embodiment, the method can include using a conductive layer having a rough surface, with or without slits, wherein the rough surface causes the induced current to follow the curves of the rough surface to produce a uniform heating on the field of view zone. The invention is further described in the following numbered clauses:
Clause 1: A window heating system for a vehicle, the window heating system comprising: a window including a first substrate having a No. 1 surface and a No. 2 surface, a second substrate having a No. 3 surface and a No. 4 surface, wherein the first and second substrates are laminated together via at least one interlayer, and wherein the window comprises a conductive layer positioned on the No. 2 surface or on the No. 3 surface; an induction coil operatively positioned on the No. 4 surface to generate magnetic flux to induce currents and generate heat on the conductive layer; and a power supply unit to provide an AC current to the induction coil, wherein the conductive layer comprises at least one slit introduced around a peripheral edge of the conductive layer.
Clause 2: The window heating system of clause 1, wherein the at least one slit is formed by removing the conductive material through printing, chemical deletion, coating dissolving enamel, or laser deletion.
Clause 3: The window heating system of clauses 1 or 2, wherein the at least one slit comprises a plurality of slits that cause induced currents on the conductive layer to be forced to detour around the plurality of slits to produce a uniform induced current flow on the surface of the conductive layer and hence a uniform heating on a field of view zone of a sensor.
Clause 4: The window heating system of clause 3, wherein at least one of the plurality of slits has a Y-shape which forces the induced currents to split and flow around two separate channels near the ends of the Y-shaped slit to provide uniform heating inside the sensor's field of view zone.
Clause 5: The window heating system of any of clauses 1-4, wherein the at least one slit has a shape comprising at least one of a slit with a round end, a curved slit, an arced slit and a curved slit with multiple branches.
Clause 6: The window heating system of any of clauses 1-5, wherein a plurality of slits and a plurality of shapes of slits are adjustable to achieve a predetermined temperature profile in a field of view zone for an Advanced Driver Assistance System (ADAS) sensor.
Clause 7: The window heating system of any of clauses 1-6, wherein the conductive layer extends across an entire viewing area of the window.
Clause 8: The window heating system of any of clauses 1-7, wherein the window includes a field of view zone for an Advanced Driver Assistance System (ADAS) sensor and the at least one slit comprises a plurality of slits, each of the slits being divided into a first portion and a second portion, wherein the first portion is located outside the sensor's field of view zone and the second portion is located inside the sensor's field of view zone.
Clause 9: The window heating system of clause 8, wherein the first portion is longer than the second portion such that the induced current moving around the first portion is negligible compared to the induced current moving inside the sensor's field of view zone.
Clause 10: The window heating system of any of clauses 1-9, wherein the conductive layer is an optically transparent electrically conductive coating.
Clause 11: The window heating system of any of clauses 1-10, wherein the conductive layer is an optically transparent metallic wire mesh printed on the No. 2 surface or the No. 3 surface.
Clause 12: The window heating system of clause 11, wherein the metallic wire mesh is printed on a flexible polyethylene terephthalate sheet (PET) and laminated to the at least one interlayer, the No. 2 surface, or the No. 3 surface.
Clause 13: The window heating system of any of clauses 1-12, wherein the induction coil houses an Advanced Driver Assistance System (ADAS) sensor to have a field of view zone exterior of the vehicle.
Clause 14: The window heating system of clause 13, wherein the induction coil, the conductive layer, and the field of view zone can be a round, rectangle, square, or trapezoidal shape.
Clause 15: A window heating system for a vehicle, the window heating system comprising a window comprising a substrate having a No. 1 surface and a No. 2 surface and a conductive layer positioned on the No. 2 surface; an induction coil operatively positioned on the No. 2 surface to generate magnetic flux to induce currents and generate heat on the conductive layer; and a power supply unit to provide an AC current to the induction coil, wherein the conductive layer comprises at least one slit introduced around a peripheral edge of the conductive layer.
Clause 16: The window heating system of clause 15, wherein the at least one slit comprises a plurality of slits that cause induced currents on the conductive layer to be forced to detour around the plurality of slits to produce a uniform induced current flow on the surface of the conductive layer and hence a uniform heating on the field of view zone.
Clause 17: The window heating system of clause 16, wherein at least one of the plurality of slits has a Y-shape which forces the induced currents to split and flow around two separate channels near the ends of the Y-shaped slit to provide uniform heating inside the sensor's field of view zone.
Clause 18: The window heating system of any of clauses 15-17, wherein the at least one slit has a shape comprising at least one of a slit with a round end, a curved slit, an arced slit, and a curved slit with multiple branches.
Clause 19: The window heating system of any of clauses 15-19, wherein the window includes a field of view zone for an Advanced Driver Assistance System (ADAS) sensor and the at least one slit comprises a plurality of slits, each of the slits being divided into a first portion and a second portion, wherein the first portion is located outside the sensor's field of view zone and the second portion is located inside the sensor's field of view zone.
Clause 20: A window heating system for a vehicle, the window heating system comprising a window including a first substrate having a No. 1 surface and a No. 2 surface, a second substrate having a No. 3 surface and a No. 4 surface, wherein the first and second substrates are laminated together via at least one interlayer, and wherein the window comprises a conductive layer positioned on the No. 2 surface or on the No. 3 surface; an induction coil operatively positioned on the No. 4 surface to generate magnetic flux to induce currents and generate heat on the conductive layer; and a power supply unit to provide an AC current to the induction coil, wherein the conductive layer has a rough surface having a plurality of curves.
Clause 21: The window heating system of clause 20, wherein the rough surface causes the induced current to follow the curves of the rough surface and take a longer path than an induced current would follow on a conductive layer having a smooth surface.
Clause 22: The window heating system of clause 20 or 21, wherein an effective surface area of the conductive layer under the magnetic flux is increased due to the rough surface, and wherein an induced current density increase leads to more power losses as heat over that of the conductive layer having a smooth surface.
Clause 23: A method of uniformly heating a field of view for use in an Advanced Driver Assistance System (ADAS) system for a vehicle comprising: providing a window including a first substrate having a No. 1 surface and a No. 2 surface, a second substrate having a No. 3 surface and a No. 4 surface; providing at least one interlayer; laminating the first and second substrates together with the at least one interlayer; providing a conductive layer positioned on the No. 2 surface or on the No. 3 surface; operatively positioning an induction coil on the No. 4 surface to generate magnetic flux to induce currents and generate heat on the conductive layer; and providing a power supply unit to apply an AC current to the induction coil.
Clause 24: The method of clause 23, comprising removing a portion of the conductive layer to create one or more slits around a peripheral edge of the conductive layer to produce a uniform induced current flow on the surface of the conductive layer and hence a uniform heating on a field of view zone of a sensor.
Clause 25: The method of clause 23 or 24, wherein providing the conductive layer comprising providing a conductive layer having a rough surface, wherein the rough surface causes the induced current to follow the curves of the rough surface to produce a uniform heating on the field of view zone.

### BRIEF DESCRIPTION OF THE DRAWINGS

For a more complete understanding of the presently disclosed invention, reference should now be had to the embodiments illustrated in greater detail in the accompanying drawings and described below by way of examples of the invention. In the drawings:
FIG. 1 is a front view of a vehicle having an ADAS sensor on the windshield that incorporates features of the presently disclosed invention;
FIG. 2 is an exploded perspective view of a windshield ADAS sensor heating system;
FIG. 3 is a cross-sectional view of a windshield ADAS heating system;
FIG. 4 is a plan view of a conductive layer according to Fig. 2 showing the relative location of the induction coil and induced currents on the conductive layer;
FIG. 5 is a captured thermal image after three minutes of heating on the windshield that is laminated with the conductive layer as shown in FIG. 4;
FIG. 6 is a temperature profile plot in a solid line taken across line A-A of FIG. 4-5 and a temperature profile plot in dash line taken across line B-B of FIG. 9C-10
FIG. 7A is a perspective view of a conductive layer having two slits introduced according to an embodiment of the present invention;
FIG. 7B is a perspective view of a conductive layer having three slits introduced according to an embodiment of the present invention;
FIG 7C is a perspective view of a conductive layer having four slits introduced according to an embodiment of the present invention;
FIG. 8 is a captured thermal image after three minutes of inductive heating on the windshield that is laminated with the conductive layer as shown in FIG. 7C;
FIG. 9A is a perspective view of a conductive layer having two Y- shaped slits introduced according to another embodiment of the present invention;
FIG. 9B is a perspective view of a conductive layer having three Y- shaped slits introduced according to another embodiment of the present invention;
FIG. 9C is a perspective view of a conductive layer having four Y- shaped slits introduced according to another embodiment of the present invention;
FIG. 10 is a captured thermal image after three minutes of inductive heating on the windshield that is laminated with conductive layer as shown in FIG. 9C;
FIG. 11 is a perspective view of a conductive layer having multiple slits according to a further embodiment of the present invention;
FIG. 12 illustrates the maximum temperature vs time curves for conductive layers with different conductivities;
FIG. 13 illustrates a cross-section of a conductive layer with a rough surface according to a further embodiment of the present invention;
FIG. 14 illustrates the maximum temperature vs time curves for the conductive layer with different surface geometries according to a further embodiment of the present invention;

### DETAILED DESCRIPTION OF THE INVENTION

As new technologies have emerged, such as Advanced Driver Assistance Systems (ADAS) the automotive windshield has been allocated to a greater responsibility. These systems operate via sensors in the windshield in tandem with cameras, radar, LIDAR (Light Detection and Ranging), and on-board controllers. For an ADAS system to perform reliably, it is essential that the field of view through the windshield is clear, making them sensitive to weather conditions. Accuracy and efficacy of ADAS can be lowered due to obstruction by fog, snow, ice, or condensation. Induction heating can provide fast and efficient deicing and defogging of the windshield to ensure reliable ADAS performance in any weather.

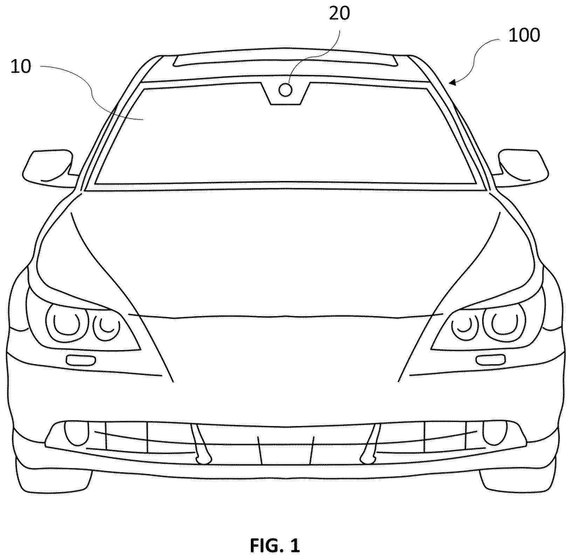

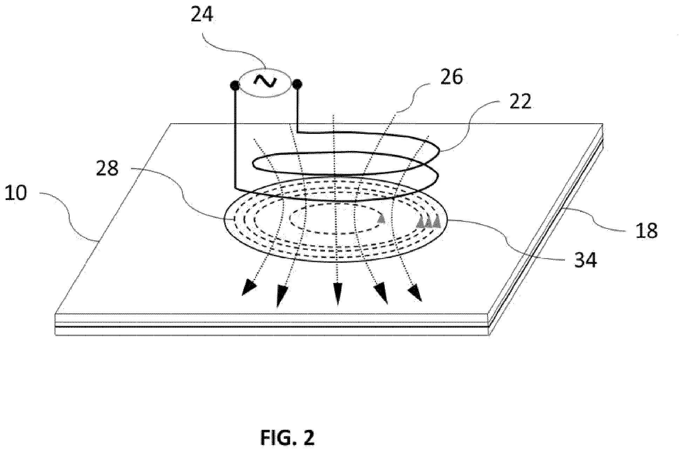

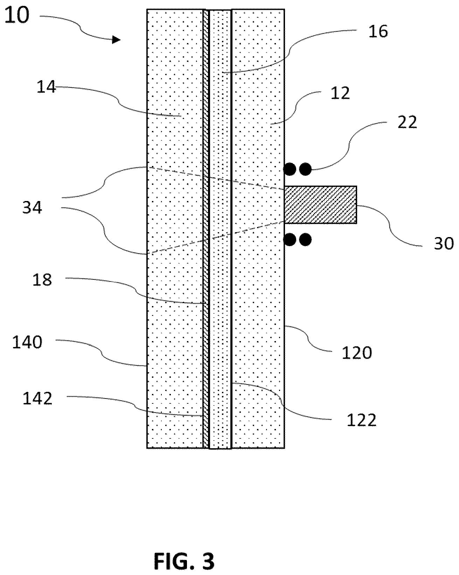

Referring now to the drawings and the illustrative embodiments depicted therein, FIG. 1 illustrates a vehicle 100 having a window 10 having an ADAS system 20 incorporating features of the present invention. Referring now to FIGS. 2 and 3, window 10 is a standard laminated vehicle windshield formed of a first substrate 14 and a second substrate 12 laminated together by at least one interlayer layer 16, such as formed from polyvinyl butyral, polyvinyl chloride, polyurethane, ethylene vinyl acetate, or similar plastic materials. The first substrate 14 and the second substrate 12 can be formed from the same or different materials and can include any desired material having any desired characteristics commonly used for windshields.

The first substrate 14 has an outer surface 140 (conventionally referred to as the No. 1 surface) on the outside of the vehicle and an inner surface 142 (conventionally referred to as the No. 2 surface). The second substrate 12 has an outer surface 122 (conventionally referred to as the No. 3 surface) on the inside of the vehicle and an inner surface 120 (conventionally referred to as the No. 4 surface) internal to window 10 or internal to the vehicle 100. The interlayer 16 is positioned between surface No. 2 and 3. Although the drawings show a window having an outer glass ply 14 and an inner glass ply 12, it can be appreciated that the present invention can be used with a monolithic window having a No. 1 surface and a No. 2 surface.

Examples of suitable materials for the first substrate 14 and the second substrate 12 include, but are not limited to, plastic substrates (such as acrylic polymers, such as polyacrylates; polyalkylmethacrylates, such as polymethylmethacrylates, polyethylmethacrylates, polypropylmethacrylates, and the like; polyurethanes; polycarbonates; polyalkylterephthalates, such as polyethyleneterephthalate (PET), polypropyleneterephthalates, polybutyleneterephthalates, and the like; polysiloxane-containing polymers; or copolymers of any monomers for preparing these, or any mixtures thereof); ceramic substrates; glass substrates; or mixtures or combinations of any of the above. For example, one or more of the substrates 12, 14 can include a conventional soda-lime-silicate glass, borosilicate glass, or leaded glass. The glass can be clear glass. The term "clear glass" means a non-tinted or a non-colored glass. Alternatively, the glass can be tinted or otherwise colored glass. The glass can be annealed or heat-treated glass. As used herein, the term "heat treated" means that the glass is tempered or at least partially tempered. The glass can be of any type, such as conventional float glass, and can be of any composition having any optical properties, e.g., any value of visible transmission, ultraviolet transmission, infrared transmission, and/or total solar energy transmission. The term "float glass" means the glass is formed by a conventional float process in which the molten glass is deposited onto a molten metal bath and controllably cooled to form a float glass ribbon. The ribbon is then cut and/or shaped and/or heat treated as desired. Examples of float glass processes are disclosed in U.S. Patent Nos. 4,466,562 and 4,671,155. The first and second substrates 14, 12 can each be, for example, clear float glass or can be tinted or colored glass or one substrate 14, 12 can be clear glass and the other substrate 14, 12 can be colored glass.

Although not limiting to the invention, examples of glass suitable for the first substrate 14 and the second substrate 12 are described in U.S. Patent Nos. 4,746,347; 4,792,536; 5,030,593; 5,030,594; 5,240,886; 5,385,872; and 5,393,593. The first and second substrates 14, 12 can be of any desired dimensions, e.g., length, width, shape, or thickness. In one exemplary automotive transparency, the first and second substrates can each be 1 mm to 10 mm thick, e.g., 1 mm to 5 mm thick, or 1.5 mm to 2.5 mm, or 1.8 mm to 2.3 mm. In one non-limiting embodiment, the first substrate 14 and/or the second substrate 12 can have a visible light transmittance of greater than 90%, such as greater than 91 %, at a reference wavelength of 550 nm. The glass composition for the first substrate 14 and/or the second substrate 12 can have a total iron content in the range of greater than 0 wt. % to 0.2 wt. % and/or a redox ratio in the range of 0.3 to 0.6.

In one non-limiting embodiment, one or both of the substrates 14, 12 may have a high visible light transmittance at a reference wavelength of 550 nanometers (nm). The term "high visible light transmittance" means a visible light transmittance at 550 nm greater than or equal to 85%, such as greater than or equal to 87%, such as greater than or equal to 90%, such as greater than or equal to 91 %, such as greater than or equal to 92%, at 5.5 mm equivalent thickness for glass from 2 mm to 25 mm sheet thickness. Particularly, useful glass for the practice of the invention is disclosed in U.S. Patent Nos. 5,030,593 and 5,030,594.

The interlayer 16 can be of any desired material and can include one or more layers or plies. The interlayer 16 can be a polymeric or plastic material, such as, for example, polyvinylbutyral, plasticized polyvinyl chloride, or multi-layered thermoplastic materials including polyethyleneterephthalate, etc. Suitable interlayer materials are disclosed, for example but not to be considered as limiting, in U. S. Patent Nos. 4,287,107 and 3,762,988. The interlayer 16 secures the first and second substrates 14, 12 together, provides energy absorption, reduces noise, and increases the strength of the laminated structure. The interlayer 16 can also be a sound absorbing or attenuating material as described, for example, in U.S. Patent No. 5,796,055. The interlayer 16 can have a solar control coating provided thereon or incorporated therein or can include a colored material to reduce solar energy transmission.

It can be appreciated that the windshield 10 can include one or more coatings, such as one, two, three or four metallic films, deposited over at least a portion of a maj or surface of one of the glass substrates 14, 12 to achieve various results or functionalities, such as heat and/or radiation reflection, heat conduction, and the like. Non-limiting examples of suitable conductive coatings typically include dielectric layers, such as metal oxides, oxides of metal alloys, metal nitrides or nitrides of metal alloys, which are transparent to visible light. The conductive coating can also include one, two, three or four metallic layers comprising a metal, e.g., such as gold, copper, silver, or combinations or alloys thereof, and can further comprise a primer layer, such as titanium, nickel chromium, or a titanium aluminum alloy, as is known in the art, located over and/or optionally under the metal reflective layer. The conductive coating can have one, two, three or four metallic layers; can have three metallic layers; or can have no more than four metallic layers. For example, the conductive coating can consist of four metallic layers; or can consist of three metallic layers. In one non-limiting embodiment, one or more of the metallic layers can comprise silver. The windshield may also include various primer layers, anti-reflective layers, and/or dielectric layers, as are known in the art, for example, as disclosed in U.S. Published Patent Application Nos. 2021/0274657, 2020/0307167, 2020/0309997, and 2020/0308045, which are incorporated by reference.

The ADAS system 20 is attached to the windshield 10 in the third visor area. An ADAS system 20 can be a camera vison system, a rain and light sensor system, a LIDAR system, and the like. Should the windshield become obscured, such as by condensation, ice, or snow on the windshield 10, the effectiveness of the ADAS system's ability to detect, ranging and 3-D mapping the vehicle surroundings will become limited. The ability of the ADAS system 20 to perform these functions are critical in the development of autonomous driving. The induction heating system disclosed herein enables a clear field of view through the windshield to ensure reliable ADAS performance in any weather conditions.

Referring back to FIGS. 2 and 3, a windshield heating system includes a conductive layer 18 positioned adjacent to the No. 2 surface 142 or the No. 3 surface 122. The conductive layer can be a coating, such as a copper or silver coating, a conductive sheet, or a conductive grid, such as Kodak's transparent Copper Micro-Wires or the SANTE FS200-LR Transparent Conductive Film. An induction coil 22 can be operatively positioned on either the No. 1 surface or the No. 4 surface to generate a magnetic flux to induce currents and generate heat on the conducting layer 18. A power supply unit 24 is provided to supply an AC current to the inductive coil 22. When an alternating voltage from the power source 24 is connected to the induction coil 22, an alternating current is produced. Subsequently this alternating current induces a time variable magnetic field 26 that has the same frequency as the alternating current causing it. When the conductive layer 18 is placed near the conductive coil 22 and its alternating magnetic field 26, eddy currents 28 are induced on the conductive layer 18, with a frequency matched to that of the magnetic field 26. The coil 22 should be placed as close to the conductive material as possible to maximize induced currents on the conductive layer.

FIG. 3 is a cross-sectional view of a windshield heating system. The window 10 includes an outer glass ply 14, an inner glass ply 12 and an interposed layer 16 between the outer glass ply 14 and the inner glass ply 12. The window 10 further includes a conductive layer 18. The conductive layer 18 can be a transparent functional coating that is applied over a majority of the No. 2 surface 142 or No. 3 surface 122 so that the transparent functional coating occupies the daylight opening of the transparency among other areas. The transparent functional coating provides various performances to the windshield, such as reducing the transmission of infrared and ultraviolet radiation through the window. If the conductive layer 18 is a transparent functional coating, it can be positioned over the No. 2 surface 142 of the outer glass ply 14 (as shown in FIG.3) or over the No. 3 surface 122 of the inner glass ply 12. The functional coating may contain one or more metal layers, for example, as disclosed in U.S. Patent Nos. 3,655,545; 3,962,488; and 4,898,789. The windshield having the conductive layer 18 may have a sheet resistance preferably about 0.6Ω/□.

An ADAS sensor 30 is situated in the center of conductive or induction coil 22 and placed close to the No. 4 surface 120 of the inner glass ply 12. Sensor 30 may be a camera, a light and rain sensor, a Lidar sensor, and the like. Sensor 30 may be attached to a sensor bracket (not shown) that is firmly mounted on the surface 120 of the inner glass ply 12. The sensor's field of view zone 34 is required to be clear of ice, snow, or condensation under all weather conditions.

According to one embodiment, the conductive layer 18 can be an optically transparent functional coating. According to another embodiment, the conductive layer can be an optically transparent metallic wire mesh printed on the No. 2 surface or the No. 3 surface. According to yet one design, the metallic wire mesh can be printed copper micro-wires or meshes printed on a flexible polyethylene terephthalate sheet (PET) or any other transparent plastic substrate using known coating technology such a Magnetron Sputter Vaper Deposition (MSVD), chemical vapor deposition (CVD), or physical vapor deposition (PVD) methods. Other coating methods could also be used, such as but not limited to, sol-gel deposition. Examples of MSVD coating devices and methods will be well understood by one of ordinary skill in the art and are described, for example, in U.S. Patent Nos. 4,379,040; 4,861,669; 4,898,789; 4,898,790; 4,900,633; 4,920,006; 4,938,857; 5,328,768; and 5,492,750.

The printed sheet can be subsequently laminated to the at least one interlayer 16, the No. 2 surface 142, or the No. 3 surface 122. Any material with good electrical conductivity may be used, such as copper, silver, and the like. The conductive layer 18 may be embedded in the interlayer 16 or laminated between two pieces of interlayers and then laminated between the first or outer substrate 14 and the second or inner substrate 12. It can be appreciated that the wire mesh or conductive layer can be transparent. It can be appreciated that the conductive layer 18 may be designed to only partially cover the windshield 10 but large enough to cover the sensor's field of view zone 34.

The induction coil 22 and the conductive layer 18 can be designed to have a shape and size corresponding to the ADAS sensor's field of view zone. Also, it can be appreciated that the induction coil 22, the conductive layer 18, and/or the field of view zone can have a variety of shapes, including, but not limited to a round, rectangle, square, or trapezoidal shape, and the like.

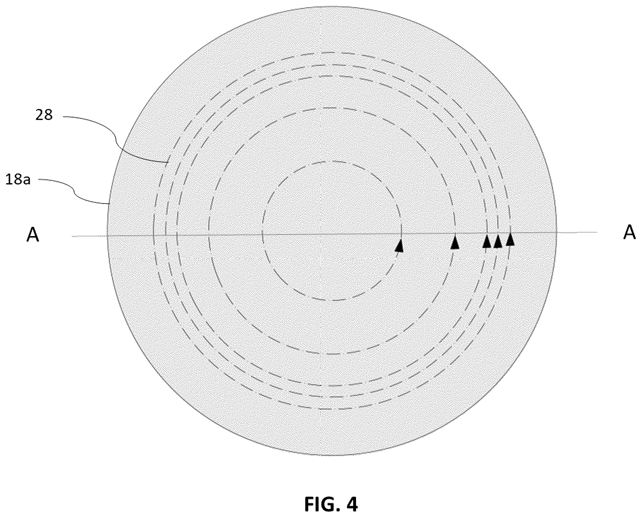

The induction coil induces currents in a nonlinear distribution across the width of the conductive layer. As shown in FIG. 2 and FIG. 4, the induction coil 22 is generally positioned directly over the conductive layers 18 and 18a. An alternative current placed across the induction coil 22 induces an Eddy current 28 in the conductive layer in direct proportion to the resonating magnetic field strength. However, the Eddy current 28 is met with the resistance of the conductive layer 18 and energy can be lost in the form of heat. The circular coil design 22 such as shown in Fig. 2, can create a null at the center because no current flows there (minimum magnetic field at the center of the coil) and the current and associated field increases toward the edge of the coil. Therefore, the induced currents in the conductive layers 18 are nonlinear, which results in non-uniform heating. Prior art attempts to address non-uniform heating in inductive heating systems have focused on changes to coil densities, coil shape, and/or position of the coil to the conductive material. These coil design changes are very time consuming, expensive and space constraining.

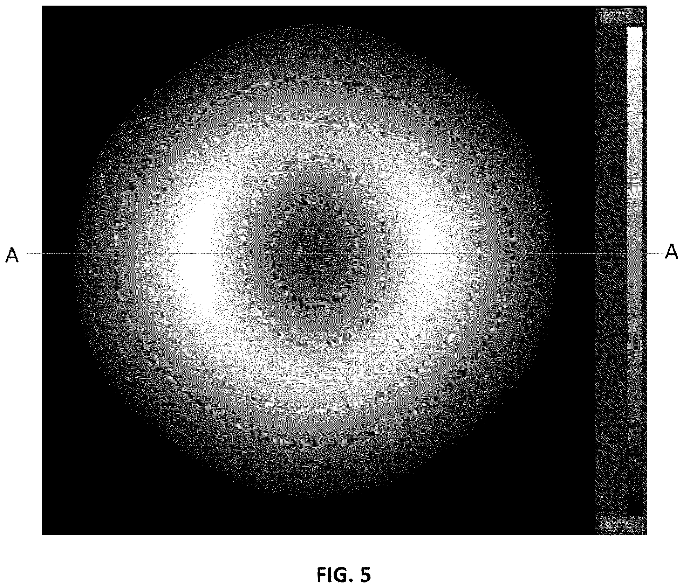

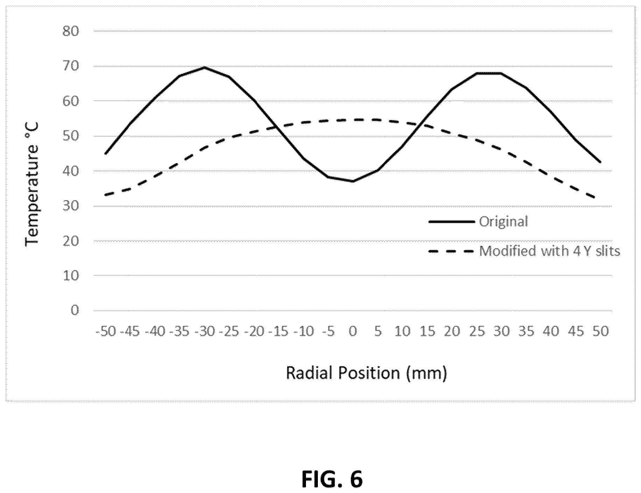

An induction system as shown in FIG.2 with the conductive layer 18a as shown in FIG. 4 was constructed and tested. The conductive coil made of 12-AWG stranded copper wire is a circular type with 3 turns and 60 mm in diameter. The conductive layer 18a is a transparent copper mesh printed on a PET substrate, wherein the PET substrate printed with the conductive layer 18a has a sheet resistance of 0.02 Ω/□ and 100 mm in diameter. An AC current of 10A of frequency 200 kHz is connected to the coil to power the induction heating system. FIG. 5 shows an image from an IR camera taken after 3 minutes of inductive heating on the windshield. After 3 minutes of heating, the conductive coil is removed, and thermal images are taken immediately to observe the heating distribution of the windshield below the coil. The white areas of the image indicate a higher temperature and the dark areas of the image indicate a lower temperature. The image clearly shows a high temperature white ring corresponding to the shape of the conductive coil where the magnetic field is strong, and the induced current density is high. The low temperature area is in the center of the coil and near the edges away from the coil where the magnetic field is weak, and the induced current density is low. Therefore, the induction heating system has a non-uniform heating as expected. FIG. 6 shows in solid line a temperature profile plot taken across line A-A in FIG. 4 and FIG. 5. The high peak temperature is 69.6°C and the low peak temperature is 37°C with a 32.6°C temperature difference in the ADAS sensor's field of view zone in the range of 60 mm in diameter.

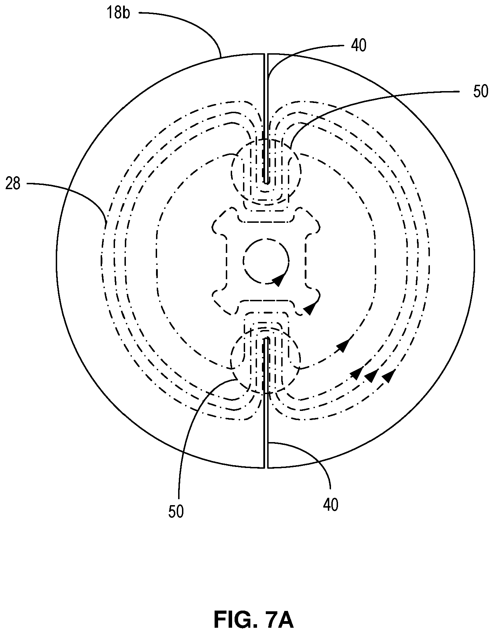

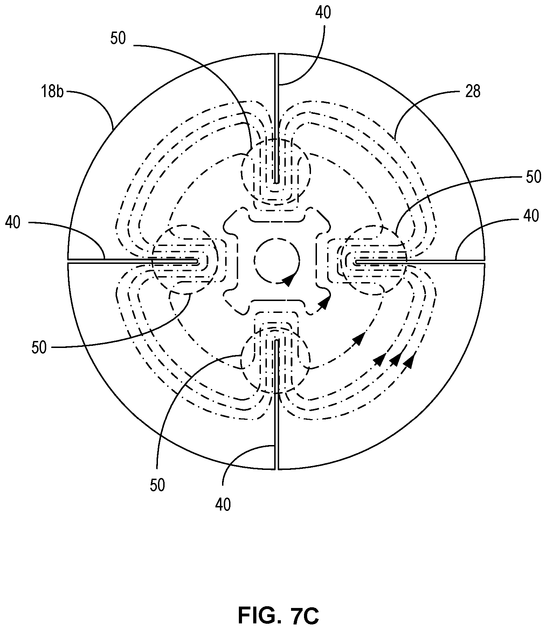

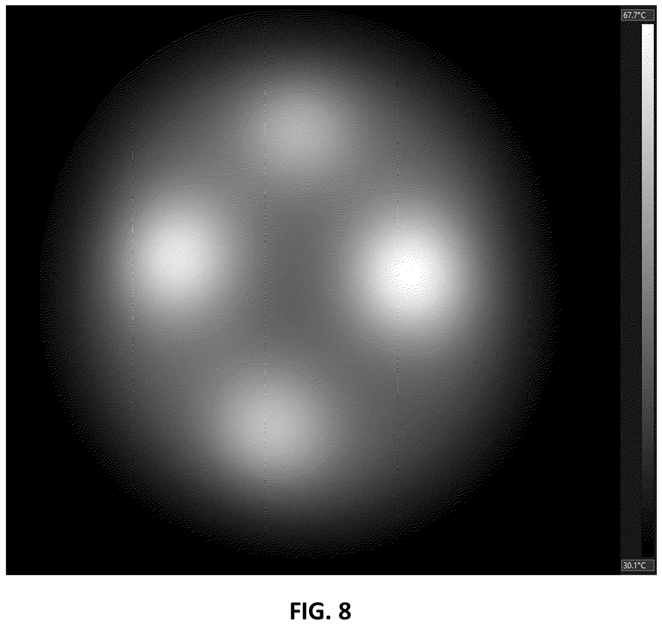

The high temperature area on the windshield is the result of higher induced current density on the conductive layer 18a where it is closer to the conductive induction coil 22. According to an aspect of the invention and with reference to Figs. 6-10, to generate a uniform heating below the conductive coil zone, one or multiple slits 40, such as one, two, three, four or more slits 40 are introduced on the conductive layer 18b as shown in FIGS. 7A-7C. The slits 40 are generated by the removal of the conductive material from the conductive layer 18b. This removal can be achieved by laser deletion, coating dissolving enamel, chemical etching, printing (i.e., not printing the conductive layer 18a in the area designated to contain a slit 40), or other techniques. The width of the slits 40 is preferably in the range of 0.1 mm to 1 mm. The length of the slits can be adjusted to achieve an acceptable temperature profile in the heating zone. The objective of adding the slits 40 to the hot spots is to redirect the induced current 28 from the hot spots (high current density) to the cold spots (low current density) such that the current can evenly spread over the heating zone to achieve a uniform heating profile in the targeted heating zone. As shown in FIGS. 7A-7C, induced currents 28 are forced to flow around the slits 40 towards the center to provide more current and heating in the center range of the heating system. FIG. 8 shows an image from an IR camera take after 3 minutes of inductive heating on the windshield laminated with the conductive layer 18b as shown in FIG. 7C. FIG. 8 shows a better temperature distribution comparing to FIG. 5 with hot spots reduced from a hot ring to four hot spots. When induced currents are forced to detour around the tips of the slits 40, higher current density appears around the tips of the slits 40 as illuminated and marked by circle 50 in FIGS. 7A-7C. Therefore, more heat is generated around the tips of the slits 40 as shown in FIG. 8.

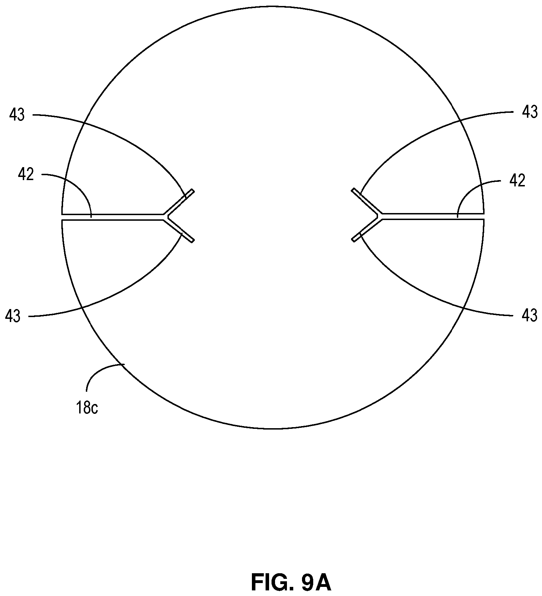

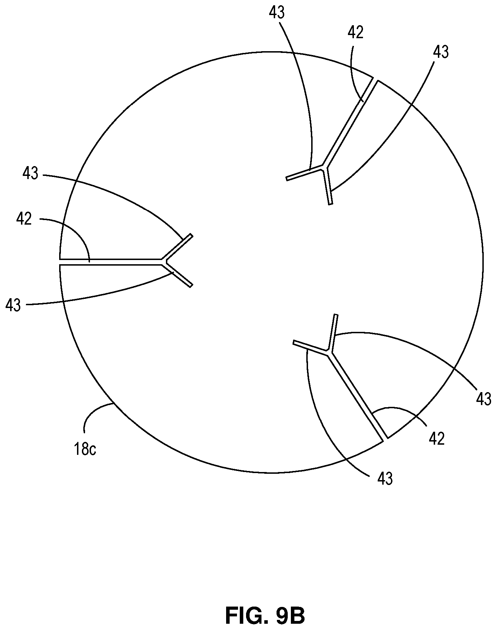

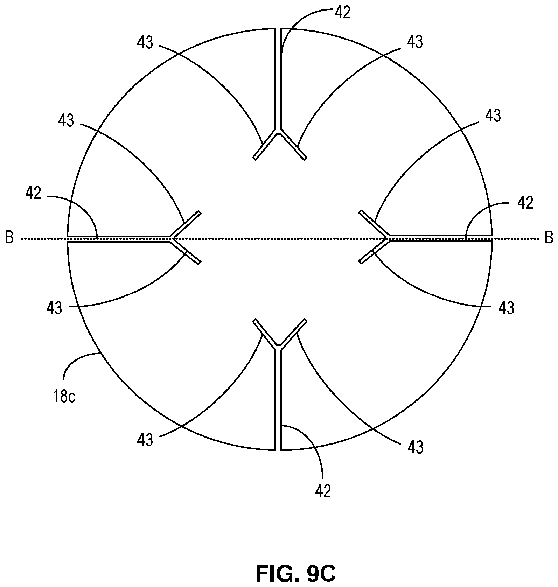

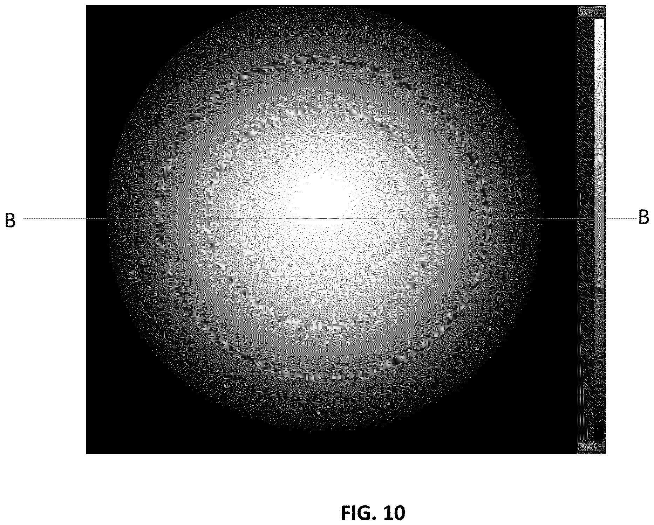

With reference to FIGS. 9A-9C, according to a further design, to disperse induced currents around the tips of the slits, the one or multiple slits can be Y-shaped slits 42, which are introduced on the conductive layer 18c. It can be appreciated that one, two, three, four, or more Y-shaped slits 42 can be introduced on the conductive layer 18c. Induced currents are then forced to split and flow around two separate channels near the ends 43 of the slits 42 to provide uniform current flow and heating inside the ADAS sensor's field of view zone. FIG. 10 shows an image of an IR camera taken after 3 minutes of inductive heating on the windshield laminated with the conductive layer 18c as shown in FIG. 9C. The white areas of the thermal image indicate higher temperature. The image clearly shows a uniform heating with no hot or cold spots inside the ADAS sensor's field of view zone. FIG. 6 shows in dash line a temperature profile plot taken across line B-B in FIG. 9C and FIG. 10. The high peak temperature is 54.7°C in the center and the low peak temperature at 30 mm from the center is 46.3°C. The temperature difference in the sensor's field of view zone is reduced to 8.4°C from 32.6°C when the heating system uses the unmodified conductive layer 18a as shown in FIG. 4.

Depending on the size and shape of the heating zone required for the ADAS sensors, the number of the slits 40, 42 and the shape of the slits 40, 42 can be adjusted to achieve an acceptable temperature profile in the heating zone. The general guideline is to use the slits to guide the induced currents from high-density areas (hot spots) to low-density areas (cold spot) such that the heating zone has an acceptable temperature uniformity.

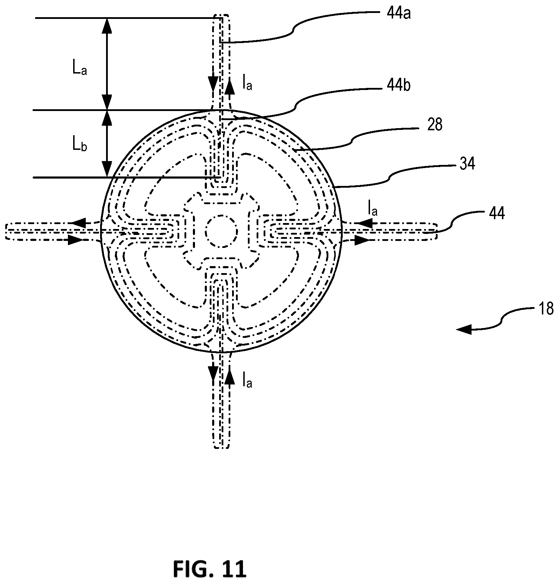

In some embodiments, the conductive layer may be covered by the whole windshield. Referring now to FIG. 11, the conductive layer 18 is incorporated into automotive window glass for use as solar shield to reduce the transmission of infrared and ultraviolet radiation through the window. The sensor's field of view zone 34 is required to be heated. An AC powered conductive coil is located inside the zone 34 to induce eddy current 28 to heat the sensor's field of view zone 34. One or multiple slits 44, such as two, three, four or more slits 44, are introduced on the conductive layer 18 by removal of the conductive material from the conductive layer 18. Each of the slits 44 may be divided into two portions: a first portion 44a that extends outside the sensor's field of view zone 34; and a second portion 44b that is located inside the sensor's field of view zone. First portion 44a has a length of *Lₐ* while the second portion 44b has a length of *L_{b}. Lₐ* is significantly longer than *L_{b},* such as at least 20% longer, so that the induced currents *Iₐ* flowing outside the sensor's field of view zone 34 is negligible compared to the induced currents 28 flowing inside the sensor's field of view zone 34. This is to ensure that all the induced currents flow inside zone 34 with minimum energy wasted outside sensor's field of view zone 34.

In some embodiments, the induction coil 22 is a circular coil. However, it can be appreciated that the induction coil may be a conical coil, rectangular coil, a square coil, a trapezoidal coil, a pancake coil, or any other shapes. A low installation angle of windshields makes the ADAS sensor screen printed area bigger and often a trapezoidal shape is necessary so that the sensor's field of view is projected to the windshield surface. Depending on the size and shape of the required heating zone and space constraining, the shape and number of the slits introduced on the conductive layer depends on the coil and the ADAS sensor's configuration and the required uniformity of the temperature. The slits may have many shapes, including but not limited to, a slit with a round end, a curved slit, an arced slit, and a curved slit with multiple branches.

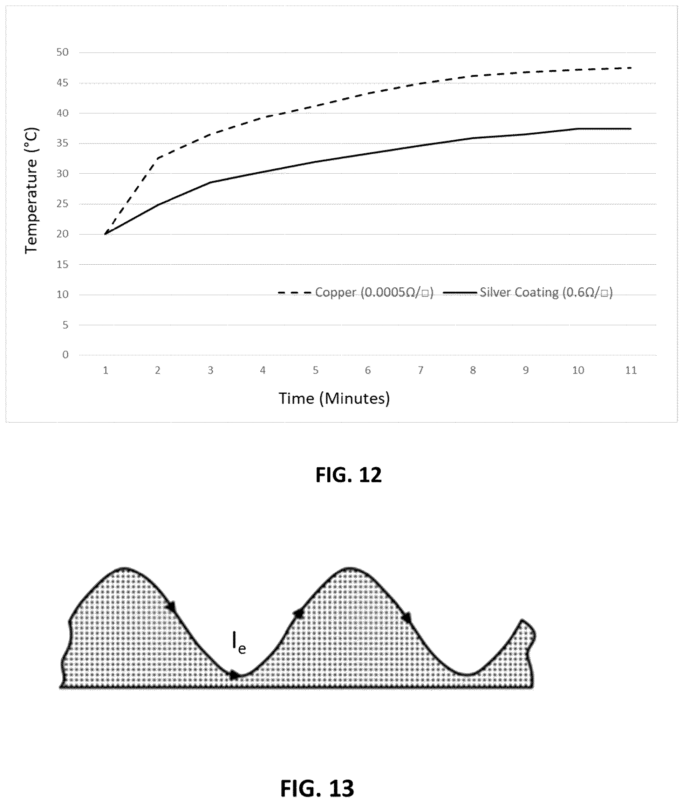

Many factors affect the magnitude of eddy current flow in the conductive layer including the frequency of the AC current passing through the conductive coil, distance of the coil to the conductive layer, surface geometry, and thickness of the conductive layer and the conductivity of the conductive layer. The greater the conductivity of the conductive layer, the greater the flow of eddy currents on the surface of the conductive layer. FIG. 12 illustrates the maximum temperature vs time curves obtained from an IR camera of copper film with sheet resistance of 0.0005 Ω/□ and silver coating with a sheet resistance of 0.6 Ω/□. Copper film with higher conductivity induces stronger eddy currents than silver coatings and generate more heat with a maximum temperature of 8°C to 10°C higher under the same magnetic field conditions from the same induction coil.

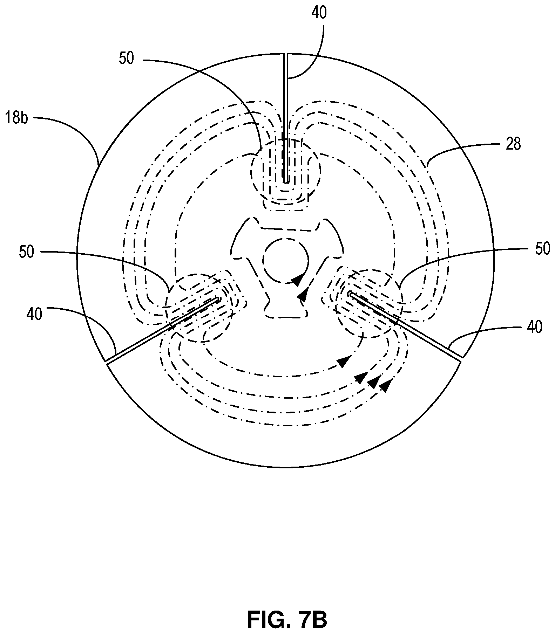

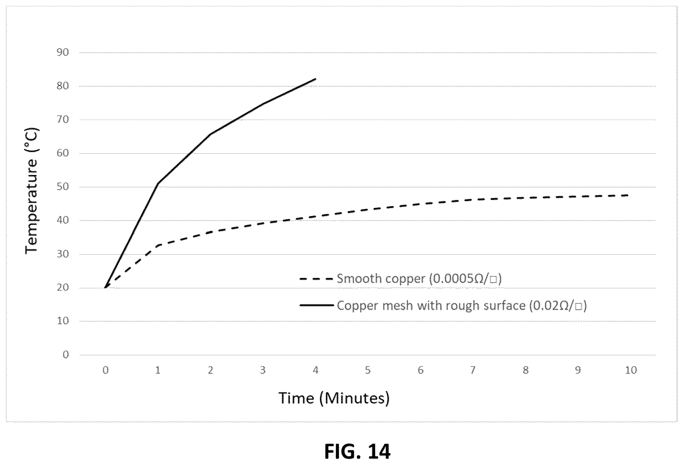

According to a further aspect of the invention, the conductive layer 18, 18a, 18b, 18c may have a rough surface. Because the skin depth of the induced eddy current is bigger than the thickness of the conductive layer, the induced currents are forced to the surface of the conductive layer. Therefore, the effective current path length on the conductive layer 18, 18a, 18b, 18c is increased by the surface roughness. FIG. 13 illustrates a cross section of a conductive layer with a rough surface. The induced Eddy current *Iₑ* is forced to follow the curve of the surface and take a much longer path than a conductive layer with a smooth surface. Consequently, more power dissipation is expected over that of a conductive layer with a smooth surface. Surface roughness can also originate from the way in which the metal is deposited onto the substrate. In the meantime, the effective surface area that is illuminated by the same magnetic field is also increased by the surface roughness or a wrinkled surface. Both longer current paths and increased effective surface areas lead to a higher metallization loss. Therefore, one should expect more power losses as heat over that of a conductive layer with a smooth surface. FIG. 14 illustrates the maximum temperature vs the time plots obtained from an IR camera of a copper film with a smooth surface in dotted line and a copper meshed film with a rough surface in solid line. The copper film has a sheet resistance of 0.0005 Ω/□ while the copper mesh film has a sheet resistance of 0.02 Ω/□. Even though the conductivity of a smooth copper film is much higher than the copper meshed film with a rough surface, the copper mesh generates much more heat than a smooth copper. The maximum temperature of the copper meshed film is 20°C higher at one minute of inductive heating and 40°C higher at 4 minutes of inductive heating as compared to the copper film having a smooth surface under the same magnetic field conditions from the same induction coil. It can be appreciated that the roughened conductive layer may be used in designs without the slits, as shown in Fig. 2 or with the slits, as shown in Figs. 7, 9, and 11.

With continued reference to Figs. 7-14, a method of uniformly heating a field of view for use in an Advanced Driver Assistance System (ADAS) system for a vehicle comprises providing a window including a first substrate 14 having a No. 1 surface 140 and a No. 2 surface 142 and a second substrate 12 having a No. 3 surface 122 and a No. 4 surface 120. The method further comprises providing at least one interlayer 16, such as plastic, and laminating the first 14 and second 12 substrates together with the at least one interlayer 16. The method also comprises providing a conductive layer 18 on the No. 2 surface 142 or on the No. 3 surface 122, operatively positioning an induction coil 22 on the No. 4 surface 120 to generate magnetic flux to induce currents and generate heat on the conductive layer 18 and providing a power supply unit 24 to apply an AC current to the induction coil. It can be appreciated that the induction coil 22 can be applied to a monolithic window having a single substrate having a No. 1 surface and a No. 2 surface, where the induction coil 22 is positioned on the No. 2 surface. With reference to Figs. 7, 9, and 11, according to one embodiment, the method can further include removing a portion of the conductive layer 18a, 18b, 18c to create one or more slits 40, 42, 44 around a peripheral edge of the conductive layer 18a, 18b, 18c to produce a uniform induced current flow on the surface of the conductive layer 18a, 18b, 18c and hence a uniform heating on the field of view zone. In addition to or alternatively, the method can also include providing a conductive layer 18, 18a, 18b, 18c with a rough surface. This rough surface can cause the induced current to follow the curves of this rough surface to produce a uniform heating on the field of view zone.

While the disclosed invention has been described and illustrated by reference to certain preferred embodiments and implementations, it should be understood that various modifications may be adopted without departing from the spirit of the invention or the scope of the following claims.

## Claims

1. A window heating system for a vehicle, the window heating system comprising:
a window including a first substrate having a No. 1 surface and a No. 2 surface, a second substrate having a No. 3 surface and a No. 4 surface, wherein the first and second substrates are laminated together via at least one interlayer, and wherein the window comprises a conductive layer positioned on the No. 2 surface or on the No. 3 surface;
an induction coil operatively positioned on the No. 4 surface to generate magnetic flux to induce currents and generate heat on the conductive layer; and
a power supply unit to provide an AC current to the induction coil, wherein the conductive layer comprises at least one slit introduced around a peripheral edge of the conductive layer.

2. The window heating system of claim 1, wherein the at least one slit is formed by removing the conductive material through printing, chemical deletion, coating dissolving enamel, or laser deletion.

3. The window heating system of any one of claims 1 or 2, wherein the at least one slit comprises a plurality of slits that cause induced currents on the conductive layer to be forced to detour around the plurality of slits to produce a uniform induced current flow on the surface of the conductive layer and hence a uniform heating on a field of view zone of a sensor.

4. The window heating system of any one of claims 1 to 3, wherein a plurality of slits and a plurality of shapes of slits are adjustable to achieve a predetermined temperature profile in a field of view zone for an Advanced Driver Assistance System (ADAS) sensor.

5. The window heating system of any one of claims 1 to 4, wherein the conductive layer extends across an entire viewing area of the window.

6. The window heating system of any one of claims 1 to 5, wherein the window includes a field of view zone for an Advanced Driver Assistance System (ADAS) sensor and the at least one slit comprises a plurality of slits, each of the slits being divided into a first portion and a second portion, wherein the first portion is located outside the sensor's field of view zone and the second portion is located inside the sensor's field of view zone,

7. The window heating system of any one of claims 1 to 6, wherein the conductive layer is an optically transparent metallic wire mesh printed on the No. 2 surface or the No. 3 surface.

8. The window heating system of claim 7, wherein the metallic wire mesh is printed on a flexible polyethylene terephthalate sheet (PET) and laminated to the at least one interlayer, the No. 2 surface, or the No. 3 surface.

9. The window heating system of any one of claims 1 to 8, wherein the induction coil houses an Advanced Driver Assistance System (ADAS) sensor to have a field of view zone exterior of the vehicle.

10. A window heating system for a vehicle, the window heating system comprising:
a window including a first substrate having a No. 1 surface and a No. 2 surface, a second substrate having a No. 3 surface and a No. 4 surface, wherein the first and second substrates are laminated together via at least one interlayer, and wherein the window comprises a conductive layer positioned on the No. 2 surface or on the No. 3 surface;
an induction coil operatively positioned on the No. 4 surface to generate magnetic flux to induce currents and generate heat on the conductive layer; and
a power supply unit to provide an AC current to the induction coil, wherein the conductive layer has a rough surface having a plurality of curves.

11. The window heating system of claim 10, wherein the rough surface causes the induced current to follow the curves of the rough surface and take a longer path than an induced current would follow on a conductive layer having a smooth surface.

12. The window heating system of any one of claims 10 or 11, wherein an effective surface area of the conductive layer under the magnetic flux is increased due to the rough surface, and wherein an induced current density increase leads to more power losses as heat over that of a conductive layer having a smooth surface.

13. A method of uniformly heating a field of view for use in an Advanced Driver Assistance System (ADAS) system for a vehicle comprising:
providing a window including a first substrate having a No. 1 surface and a No. 2 surface, a second substrate having a No. 3 surface and a No. 4 surface;
providing at least one interlayer;
laminating the first and second substrates together with the at least one interlayer;
providing a conductive layer positioned on the No. 2 surface or on the No. 3 surface;
operatively positioning an induction coil on the No. 4 surface to generate magnetic flux to induce currents and generate heat on the conductive layer; and
providing a power supply unit to apply an AC current to the induction coil.

14. The method of claim 13, comprising removing a portion of the conductive layer to create one or more slits around a peripheral edge of the conductive layer to produce a uniform induced current flow on the surface of the conductive layer and hence a uniform heating on the field of view zone.

15. The method of any one of claims 13 or 14, wherein providing the conductive layer comprises providing a conductive layer having a rough surface, wherein the rough surface causes the induced current to follow the curves of the rough surface to produce a uniform heating on a field of view zone of a sensor.
